# EUROPEAN PATENT SPECIFICATION

(11) **EP 2 372 154 B1**
(45) Date of publication and mention of the grant of the patent: **17.04.2013**
(21) Application number: 10170465.8
(22) Date of filing: 22.07.2010
(51) Int. Cl.: F04B 27/08, F16D 27/00, F04B 27/10

(54) **Compressor with temperature sensor**
Capteur de vitesse
Geschwindigkeitssensor

(30) Priority: 17.03.2010 EP 10156818
(43) Date of publication of application: 05.10.2011
(73) Proprietor: Valeo Compressor Europe, s.r.o., 39601 Humplec (CZ)
(72) Inventor: Domke, Daniel, 39601 Humpolec (CZ); Jebelli, Kamyar, 39601 Humpolec (CZ); Fiene, Andreas, 39601 Humpolec (CZ)
(74) Representative: Popp, Eugen

(56) References cited:
- EP-A1- 1 691 074
- EP-A2- 1 939 449
- US-A- 5 807 076
- US-A1- 2007 017 771

## Description

### BACKGROUND OF THE INVENTION

Compressors find use in a myriad of situations; for example, a compressor is present in the cooling system for kitchen appliances, in particular fridges, as well general air conditioning systems. One particular use of compressors which has increased greatly in the last few years, is for use in the air conditioning system of automobiles. In such a scenario, the compressor is typically a belt driven compressor, wherein the rotation of the motor in the automobile is used to drive the belt, which in turn is used to drive the compressor.

Typical belt driven compressors in automobiles are provided with a pulley for interacting with the belt. As will be described throughout the present application, it is intended that the compressor works for both a belt or chain driven drive system, and whilst the use of a belt will be described interfacing with a pulley, it is clear that this is equally appropriate for any drive system interfacing with the compressor. The pulley of the compressor is provided with a magnetic clutch, such that the rotation of the pulley can be transmitted through to the drive shaft of the compressor.

Magnetic clutch assemblies are well known in compressors, and typically comprise an electromagnet which is used to draw an armature plate, which is in turn connected via a hub to the drive shaft, into frictional engagement with the pulley, such that rotation of the pulley is transmitted via the armature plate through to the drive shaft. When the electromagnet is switched off, the armature plate is driven away from the rotating pulley, and rotation of the pulley does not lead to rotation of the drive shaft and thus the compressor is off.

It is desirable to be able to monitor the appropriate operation of the compressor, so as to avoid damage to either the drive system or the electromagnetic clutch assembly. In particular, monitoring the rotation of the drive shaft of the compressor and comparing this with the rotation of the motor of the automobile, gives a clear indication as to whether the compressor is being driven at the same rotational velocity as the motor, or whether a problem exists. In particular, if the drive shaft of the compressor seizes, this will stop the armature plate from rotating, and this can lead to slippage of the clutch with associated damage thereof, as well as slippage of the belt or chain on the pulley for the drive system. This is to be avoided if possible, and thus it is desirable to monitor the speed of rotation of the compressor in order to determine when a compressor seizure occurs.

The closest prior art is represented by US 2007/0017771.

One such system is known in JP 2007 024257, in which a plate is placed radially extending from the drive plate, such that with rotation of the drive plate the edge portion of the plate is brought into closer alignment with the casing of the compressor. Ensuring that the armature plate, hub, drive shaft and rotating plate are made of magnetic material, the system of this prior art utilises the magnetic field existing from the electromagnet through to the plate and into the casing of the compressor back to the electromagnet. By positioning a magnetic sensor in a location such that this change in magnetic field with the rotation of the plate, and thus the increase and decrease in magnetic flux at the sensor, can be measured, the system allows for a calculation of the rotation of the drive shaft in the compressor. This system is somewhat complex, and further requires the use of all magnetic parts in the compressor, such that a magnetic leakage current may be set up from the electromagnet through the drive shaft and plate. In this prior known system, it is also necessary for the magnetic field to change rapidly within magnetic parts of the compressor such that the change of flux may be measured. This can cause problems at high rotational speeds, as the material will tend to cause a delay in the change of the magnetic field passing through it, which can lead to a near permanent "on" reading being made as a result of the magnetic field never properly dissipating.

In order to simplify the system given in the prior art, as well to improve the accuracy thereof, it is desirable to have a system in which the magnetic leakage current from the electromagnetic is not used for determining the rotation of the drive shaft. This further decreases the complexity of incorporating such a sensor within the compressor, which is desirable from a manufacturing point of view.

Another issue with compressors relates to the potential for them to overheat. As with any device which comprises revolving and moving parts, without appropriate lubrication and maintenance these parts can become overheated and worn very rapidly. One mechanism of determining if a compressor is functioning properly, or if certain elements have too much friction there-between, is to monitor the temperature of the compressor. Unfortunately, it is often too late to save the compressor, or at least notice the problems of overheating, by simply monitoring the outside temperature of the compressor body. It is therefore desirable to incorporate a temperature sensor within the compressor, as close as possible to the potential sites of increased friction to provide an early indication of problems.

EP 1 162 382 discloses the provision of a temperature sensor within a compressor, and provides a number of different locations in which the sensor can be embodied. It is noted, however, that in each of the examples shown, the temperature sensor is still located somewhat remotely from the bearings of the pulley, It is often the area around the bearings which overheats first, and thus it is desirable to provide a temperature monitor closer to the bearings, without compromising the compressor.

### SUMMARY OF THE INVENTION

The present invention provides a compressor in accordance with independent claim 1, Further preferred embodiments are given in the dependent claims.

The claimed invention can be better understood in view of the embodiments of a compressor described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention *per se.* This also holds for the subsequent "Brief Description of the Drawing" as well as the "Detailed Description."

In particular, the present disclosure relates to a compressor which is being driven by any known driving source which can transmit a rotational force onto a pulley of the compressor. The pulley may be a belt or chain driven pulley, or any other form of system in which the drive system causes the pulley to rotate. The rotation of the pulley is coupled to the drive shaft by means of a magnetic clutch, in particular where the magnetic clutch comprises an electromagnet in the pulley which will attract an armature plate connected to the drive shaft to cause a frictional engagement. When the electromagnet is switched on, the armature plate is in frictional contact with the pulley, such that rotation of the pulley leads to rotation of the drive shaft.

The compressor is provided with an electronic rotation sensor in the region of the drive shaft. This is provided such that an electrical output which is indicative of the rotation speed of the hub, and so forth, is obtained. A temperature sensor can be incorporated within the circuitry being used to power and monitor the rotation sensor, such that the same circuitry may be used to detect both the rotation speed of the compressor, as well as the temperature thereof.

The rotation sensor may be provided by a magnetic field sensor, such that this may measure a changing magnetic field in the region of the drive shaft. Providing magnetic portions on either the drive shaft or hub, or as an integral part thereof, allows that with rotation of the drive shaft, a changing magnetic field can be sensed by the rotation sensor. In order to improve the sensitivity of this system, it is preferable that the rotation sensor, in particular the magnetic field sensor, and also perhaps the magnetic portions, are provided in a region outside of a magnetic leakage path in the compressor.

The magnetic field sensor may be provided by a Hall Sensor. In particular, the Hall Sensor may be a so-called Hall Sensor switch, wherein when the Hall Sensor switch measures a magnetic field above a certain value, the output from the Hall Sensor switch is a maximum. When the measured magnetic field drops beneath this triggering value, the output of the Hall Sensor switch is a minimum. In other words, the Hall Sensor switch provides a logic 1 or 0 depending upon the measured magnetic field.

It is preferable for the temperature sensor to be embodied by an electronic or electrical device, which is possessed of positive or negative temperature coefficient properties. Such devices are well known and exhibit a changing conductivity and resistivity/resistance as a result of the changing temperature of the device. What is more, the temperature coefficient properties of these devices are known in advance, and can thus be used to monitor and adjust the output of the electrical or electronic circuit running the electronic rotation sensor. By positioning the temperature sensor within the electrical circuitry of the rotational sensor, the output from the sensor can be adjusted in a known manner, and this can be used to determine if the temperature in the compressor and/or also outside the compressor, in particular at the bearings for the pulley etc., is too high.

One possible route for employing the temperature sensor in combination with the rotational sensor, is to provide the temperature coefficient device at the power input to the rotational sensor. If the rotational sensor is a hall sensor, or a hall sensor switch, positioning a temperature coefficient device at the power supply will allow the voltage and current through to the hall sensor to be varied with the temperature of the device. If the compressor overheats then the resistance of the temperature coefficient device will change, which will also change the voltage supplied to the hall sensor; this effect can then be used to actually switch off the hall sensor if the voltage is not sufficient.

It is further possible to provide a control unit for monitoring the output of the rotational sensor, which not only monitors the rotation of the hub and driveshaft but also monitors the effects of the temperature sensor on the output. In the above example: if the temperature increases and the hall sensor is switched off as a result of insufficient power, the control unit will be able to monitor this and can determine that a temperature overheat has occurred, and can thus disengage the drive system or the electronic clutch assembly.

It would also be possible to position the temperature sensor at the output of the rotational sensor. By varying the resistance of the temperature sensor, the output from the rotational sensor will also be affected in a known manner. In particular, this could be provided at a point on a potential divider, such that changing the resistance of the temperature sensor will lead to a change in the central voltage between the potential divider, which could also be monitored by the control unit.

As the control unit could monitor the rotational speed of the hub, if the signal from the rotational sensor is changed by means of the changing resistance, the control unit could monitor this and determine the change in temperature as a result. As discussed above, if the temperature sensor forms part of a potential divider, and if the control unit is monitoring the central voltage there-between, the voltage will obviously change as a result of the change in resistance of the temperature sensor. The control unit is then advantageously able to determine that the temperature has changed, and is potentially too high, so that the control unit can then switch off the compressor.

As discussed above, the most common places for temperature increase with a compressor is around its shell nose and the bearings, in particular ball bearings are usually used in such compressors. If the lubrication around the bearings is too old or is insufficient or leaks through its seals, extended use of the compressor will lead to an overheat in the bearings. By locating the temperature sensor in a region near the bearings and the shell nose of the compressor, an accurate reading of the temperature can be made and thus potential damage to the compressor can be avoided.

In order to provide wiring through to the rotational sensor, it is possible to structure the shell nose with a channel therein. The channel in the shell nose can extend from the control unit through to the position of the rotational sensor, in particular near to the hub of the compressor. The channel through the shell nose will necessarily pass underneath the bearings of the compressor, and thus the channel could also be used to house the temperature sensor. Positioning the temperature sensor by the bearings and shell nose in the channel will allow for an improved accuracy in the temperature measurements, and can thus lead to a quick determination of compressor overheat.

The channel can be provided with an insert which is used for housing the wiring, and potentially the temperature sensor, so as to protect these from the compressor as this is in operation. Alternatively, it is possible to provide the wiring and temperature sensor simply within the channel, and to provide some form of cover over this for protection. Clearly, the cover or insert should be made from a material which has reasonably sufficient thermal conductivity such that the temperature in the region of the temperature sensor is accurate, and relates accordingly to the temperature of the compressor itself,

In order to improve the thermal conduction of the heat of the compressor to the temperature sensor, it is possible to provide a series of heat plates in the region of the channel. The heat plates are preferably made from a material which exhibits good or even very good thermal conductivity, such that the temperature of the compressor or the bearings for the pulley, respectively, is accurately transferred to the temperature sensor. Metals are ideal for the heat plates, and in particular copper. The heat plates could extend along the extent of the channel, such that the temperature at one portion of the compressor is quickly transferred across the whole of the heat plate. In this scenario the location of the temperature sensor is rather more relaxed, and it merely needs to be in the region of the heat plate. As will be readily understood the heat plates will be maintained at the same temperature as the compressor, and if an overheat point occurs in any one smaller section of the compressor or the bearings for the pulley, respectively, this will be transferred along the whole of the heat plate to the temperature sensor which will then monitor this and can lead to the compressor being switched off if an overheat occurs.

### BRIEF DESCRIPTION OF THE DRAWING

- Figure 1:: This figure shows a cross sectional view of a compressor highlighting the key aspects of the rotation sensor of the present disclosure.
- Figure 2:: The cross sectional view of the compressor of Figure 1 showing possible magnetic current leakage paths, Ø₁, Ø₂ & Ø₃.
- Figure 3:: Front view of the compressor showing the location of the magnetic sensor in relation to a ring magnet.
- Figure 4:: Electronic circuitry for connection of the rotation sensor.
- Figure 5:: Electronic circuitry showing the rotation sensor and temperature sensor circuitry.
- Figure 6:: Electronic circuitry similar to Figure 5, with temperature sensor in a second possible location.
- Figure 7:: Placement of the temperature sensor within the compressor.
- Figure 8:: Additional heat plates provided in the compressor shown in Figure 7.

### DETAILED DESCRIPTION

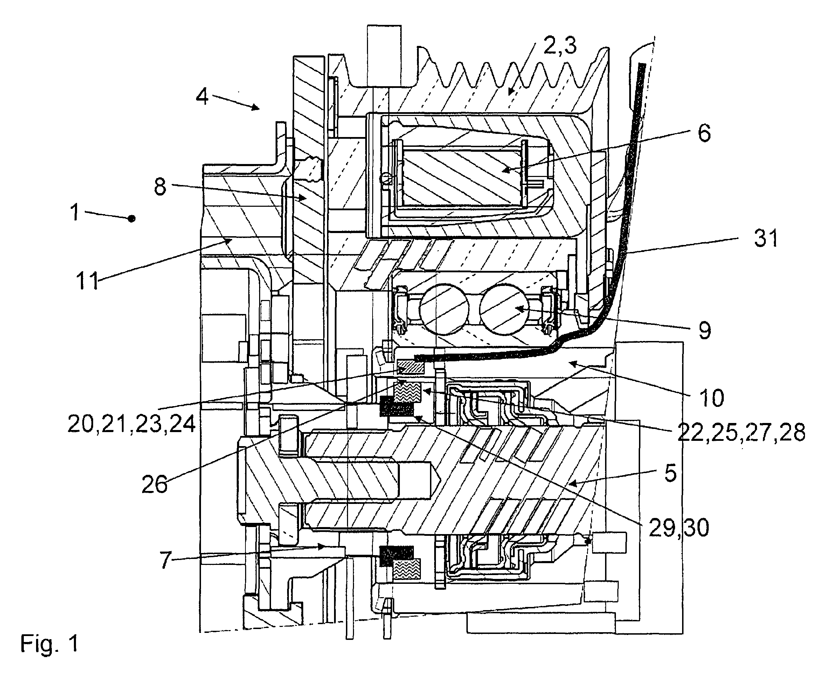

Figure 1 shows the front drive section for a compressor 1. In the Figure, the nose region of the compressor 1 is shown in cross section, wherein the drive shaft 5 of the compressor 1 generally shows the rotation axis of the compressor 1. The compressor 1 which is shown is that of a belt driven compressor 1, although this is purely by example. The particular compressor 1 shown in Figure 1 is provided with a rotatable pulley 2 which has a centre of rotation generally aligned with that of the drive shaft 5. This sort of compressor 1 is well known, and in particular is useful for transferring the rotational motion of the pulley 2 onto the drive shaft 5.

The compressor 1 shown in Figure 1 is by way of example only, and any other design of compressor 1 in which motion from an external source is provided onto the drive shaft 5 is also susceptible to the concepts of the present disclosure. Indeed, the present disclosure relates to a rotation sensor 20 for monitoring the rotation of the drive shaft 5. It is not necessary for the compressor 1 to be limited to that of the general discussion presented herein, and indeed the rotational sensor 20 will function equally well on any other form of compressor 1.

The particular design shown in Figure 1 for the compressor 1 is that of a compressor 1 comprising outside of its housing a magnetic clutch assembly 4. The magnetic clutch assembly 4 comprises a pulley 2 which is held on bearings 9 on the shell nose 10 of the compressor 1. The pulley 2 is rotatable on the bearings 9 around the shell nose 10, and in the example shown connects with the drive system 3 through the pulley 2. The drive system 3 may be a belt drive system, it may also be a chain drive system or any other known drive system which can cause the pulley 2 to rotate.

An electromagnet 6 is provided within the pulley 2, to form part of the magnetic clutch assembly 4. In particular, the electromagnet 6 is used to magnetically attract an armature plate 8 which is held by means of a hub 7, preferably, to the drive shaft 5. Rotation of the armature plate 8 leads to rotation of the drive shaft 5, in particular via the hub 7 if this is provided. In order to transfer rotation from the drive system 3 to the drive shaft 5, the magnetic clutch assembly 4 is activated. The specifics of this activation are that the electromagnet 6 is switched on, such that the armature plate 8 is attracted to the pulley 2 and a frictional engagement is achieved. With frictional engagement, slippage between rotation of the pulley 2 and armature plate 8 is reduced or removed, such that rotation of the pulley 2 will lead to rotation of the drive shaft 5. Whilst the electromagnet 6 is energised, the armature 8 and pulley 2 rotate as one, thus leading to driving of the drive shaft 5.

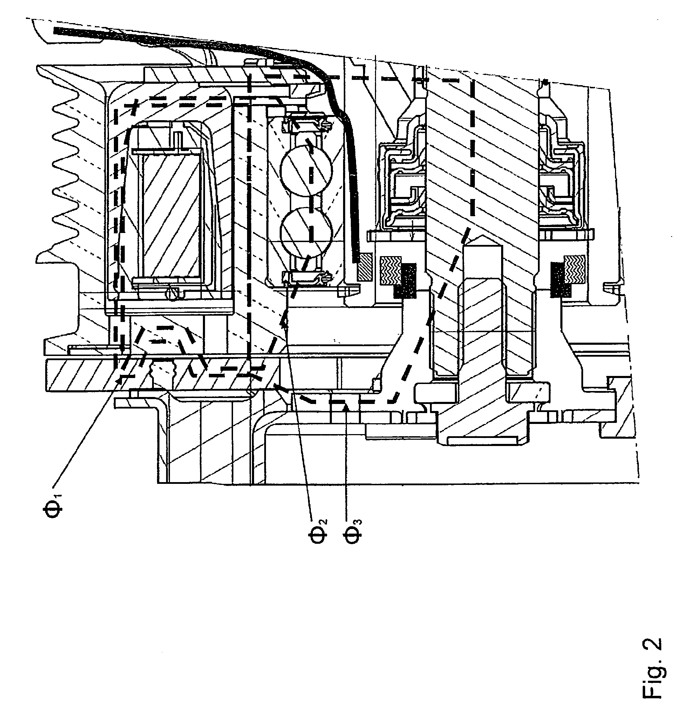

When the electromagnet 6 is not activated, a small gap will exist between the pulley 2 and an armature plate 8. The armature plate is still supported by the hub 7 via an annual damper (not numbered). The annual damper is elastic, such that the armature plate is movable along the shaft axis via a rubber damper (also not numbered). When the electromagnet 6 is activated, a magnetic flux is generated which passes through elements of the compressor 1 as it attracts the armature plate 8. Some of these paths can be seen in Figure 2 as Ø₁, Ø₂ & Ø₃.

As has been discussed above, if the compressor 1 were to seize, this typically means that the drive shaft 5 also seizes. As is known in the art, seizure of the drive shaft 5 will lead to slippage either between the armature plate 8 and the pulley 2, or with the drive system 3 and the pulley 2. In either of these situations, damage can result to the compressor 1 and drive system 3, which is to be avoided if necessary. In order to avoid this, a rotational sensor 20 is advantageously located within the compressor 1, and the rotation of the drive shaft 5 can be monitored. If the rotation of the drive shaft 5 is monitored with the rotation of the drive system 3, a change or significant reduction in the rotation of the drive shaft 5 compared with the drive system 3 indicates that a fault has developed somewhere in the system. When such a fault is determined, it is possible to demagnetise the electromagnet 6 and disengage the clutch system, such that armature plate 8, pulley 2 and drive system 3 are not damaged,

The rotational sensor 20 of the present disclosure is shown in Figure 1 in a location near to the drive shaft 5 and hub 7. In particular, the rotational sensor 20 may be a magnetic field sensor 21, such that the magnetic field in the region of the drive shaft 5 can be monitored and measured. As is clear, if rotation of the drive shaft 5 would lead to a change in the magnetic field in the region of the magnetic field sensor 21, this change would be cyclical and would lead to a direct measurement of the rotation of the drive shaft 5. In particular, if a signal could be generated for a known rotation of the drive shaft 5, the system could immediately monitor the number of rotations of the drive shaft 5 per second, and thus the revolutions per minute.

As is known in the art, when an electromagnet 6 is placed within a compressor 1, a series of magnetic leakage paths or magnetic flux paths are generated through parts of the compressor 1. In particular, the compressor 1 is usually made from a magnetic material, such that a magnetic current or magnetic field will pass therethrough. As is also known in the art, a magnetic field will typically be guided and induced through the magnetic material parts of the compressor 1, to give a series of magnetic flux paths or magnetic leakage paths. Again, some of these magnetic flux paths may be seen in Figure 2 as Ø₁, Ø₂ & Ø₃.

It was discovered by the present Applicants that the region of the compressor 1 lying near to the drive shaft 5, and in particular between the drive shaft 5 and the electromagnet 6 in the pulley 2, is a region with an extremely low magnetic field. As has been discussed above, the sections of the compressor 1 which are comprised of magnetic material will tend to constrain the magnetic flux leakage paths within such material. It is not uncommon to provide the hub 7 and drive shaft 5 from steel or another magnetic material for reasons of strength, and thus the electromagnet 6 will induce a magnetic leakage path through the armature plate 8, hub 7 and drive shaft 5. By locating the rotational sensor 20, in particular a magnetic field sensor 21, away from this magnetic leakage path, the accuracy of the measurements taken by the magnetic field sensor 21 can be improved.

Looking at Figures 1 and 2, a second leakage path is known to exist in this sort of compressor 1, wherein this path passes from the electromagnet 6 through the bearings 9 and back to the electromagnet 6. Indeed, this magnetic leakage path through the bearings 9, when combined with the magnetic leakage path through the armature plate 8, hub 7 and drive shaft 5, leads to a region in the middle which is generally well shielded from magnetic leakage paths in the compressor 1. This has the additional advantage that the region lying between the drive shaft 5 and bearings 9 is also well shielded from external magnetic fields, as these magnetic parts tend to form a Farraday cage and so magnetic fields tend not to permeate through the pulley 2, electromagnet 6 and bearings 9 through to the region near the drive shaft 5.

This combination of magnetic shielding to external magnetic fields, as well as specific constriction of magnetic leakage paths away from the region highlighted as comprising a rotational sensor 20, has been measured by the present Applicant. Indeed, it has been shown that for a compressor 1 similar to that shown in Figure 1, when the electromagnet 6 is activated and attracting the armature plate 8, the magnetic field strength at the hub 7 can be around 30 mT. Further, in such a system the magnetic field strength at the surface of the shaft can be as high as 35 mT, as a result of the magnetic leakage path from the electromagnet 6 round through to the drive shaft 5. When, however, one measures the magnetic field strength at a region slightly removed from the drive shaft 5 and hub 7, one actually measures a magnetic field strength of between 0.1 and 1 mT. These measurements clearly show that the magnetic material parts of the compressor 1 are appropriately restraining any leakage magnetic flux and external magnetic fields, such that the magnetic field sensor 21 is located in a region with very low magnetic fields. As will be understood, if the magnetic field sensor 21 is in a region in which stray magnetic fields are extremely low, the magnetic field sensor 21 can be chosen to have a very high sensitivity to the measurable and desirably measured magnetic field, thus dramatically improving the sensitivity and accuracy of the rotational sensor 20.

The reduction in magnetic field within the shell nose 10 of the compressor 1 shown in Figure 1, can further be improved by making the shell nose 10 of the compressor 1 from a non-magnetic material. In the present disclosure, non-magnetic materials are unlimited in scope, and can refer to any of the non-magnetic metals, ceramics, plastics and the like. By structuring the shell nose 10 from a non-magnetic material, this ensures that substantially no magnetic leakage path will exist through the shell nose 10, and ensures that these will reside through the bearings 9 and drive shaft 5. In this manner, it is clear that the magnetic field sensor 21 can be positioned in a location which is outside of any magnetic leakage paths within the compressor 1.

As mentioned above, in order to monitor the rotation of the drive shaft 5, a magnetic portion 22 should be formed as a part of the hub 7 or drive shaft 5, or positioned thereon. In such a way, the magnetic field in the region of the magnetic field sensor 21 can then be adjusted and brought to a level which can be properly and accurately measured by the magnetic field sensor 21. As is clear from the above, the magnetic field sensor 21 is located in a region outside of the magnetic leakage paths within the compressor 1. Because of this, it is possible to provide a magnetic field sensor 21 which has a very high sensitivity, and is able to detect quite small magnetic fields. Given, however, that the maximum field strength as a result of external magnetic fields and magnetic leakage paths in this region are very low, the magnetic field sensor 21 can have a similarly low minimum sensitivity. By ensuring that the minimum sensitivity of the magnetic field sensor 21 lies above the maximum leakage flux or external magnetic field at the location of its installation, the magnetic field sensor 21 will only respond to a magnetic portion 22 positioned on the rotating drive shaft 5 or hub 7. Preferably, the magnetic field sensor 21 is in a location in which the maximum leakage magnetic flux is at most 70% of the switching value of the magnetic field sensor 21. Preferably it is at most 60%, or 50% or 40% or 30% or 20% or even 10% of the switching value of the magnetic field sensor 21. In such a way, the magnetic field sensor 21 will not be influenced by any aspects of the compressor 1 or external magnetic field, and thus will only be triggered by the magnetic portion 22 on the hub 7 or drive shaft 5.

It is possible to provide the magnetic portion 22 by means of extensions 25 on the drive shaft 5 or hub 7. By decreasing the air gap 26 between the extensions 25 and the magnetic field sensor 21, the magnetic field in the region of the magnetic field sensor 21 can be appropriately changed. That is, when the electromagnet 6 is functioning, the magnetic leakage path through the armature plate 8, hub 7 and drive shaft 5 will also magnetise the extensions 25, such that when the air gap 26 is at its minimum, the magnetic field sensor 21 measures the change in magnetic field and monitors that the extensions 25 have passed,

An alternate mechanism to change the magnetic field in the region of the magnetic field sensor 21, is to provide a permanent magnet on either the hub 7 or drive shaft 5. The permanent magnet 27 can be a single bar magnet which directs the magnetic field in the radial direction outward from the drive shaft 5, and which is generally aligned with the magnetic field sensor 21. As can be understood, rotation of the drive shaft 5 will lead to rotation of the permanent magnet 27 and thus with every complete revolution the permanent magnet 27 passes the magnetic field sensor 21 once, and a rotation of the drive shaft 5 can be monitored. Clearly, it is quite possible to provide a number of permanent magnets 27 distributed around the drive shaft 5 or hub 7 in the circumferential direction, such that the magnetic field sensor 21 monitors several permanent magnets passing the sensor 21, and thus can determine the rotational velocity of the drive shaft 5.

It is further possible to provide the permanent magnet or magnets 27 by means of a permanent magnet ring, or rings 28. Permanent magnetic rings are well known, and typically have a changing magnetic pole in the circumferential direction of the magnetic ring 28. Positioning such a magnetic ring 28 on either the drive shaft 5 or hub 7 in the region of the magnetic field sensor 21, will allow the magnetic field sensor 21 to monitor the changing magnetic poles as these rotate past the field sensor 21, and thus the rotation of the drive shaft 5 can be monitored. As is clear, the use of the permanent magnet will ensure that a high enough magnetic field can be generated by the magnet at the magnetic sensor 21, and thus the magnetic sensor 21 will be appropriately triggered.

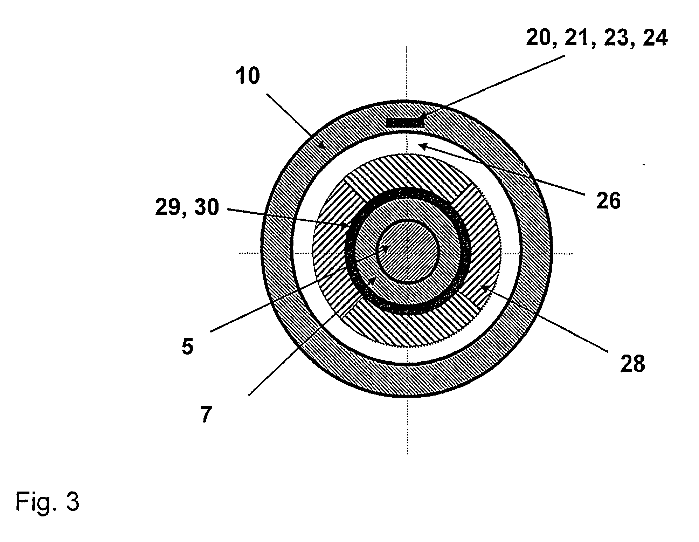

Looking at Figure 3, we see an end view of the compressor 1 shown in Figures 1 and 2. In particular, the shell nose 10 can be seen surrounding the drive shaft 5. The Figure further shows that a permanent magnet ring 28 is placed around the hub 7 of the compressor 1, and passes all the way around the hub 7 and drive shaft 5. The magnetic field sensor 20 is shown in Figure 3 in close proximity to the permanent magnetic ring 28, and is within the shell nose 10. Indeed, the magnetic field sensor 20 may advantageously be positioned within a groove within the outer surface of the shell nose 10.

To further improve the accuracy of the magnetic field sensor 21, it is possible to provide some form of magnetic shielding between the drive shaft 5 and hub 7 and the permanent magnet 27 or permanent magnet rings 28. By providing a material with a very low magnetic permeability, or very high magnetic resistivity, the magnetic fields generated by the hub 7 and drive shaft 5, as a result of magnetic leakage paths from the electromagnet 6, can be severely attenuated or indeed stopped. This use of a magnetic shielding means 30 will improve the accuracy of the magnetic field sensor 21, as it ensures that no extraneous or sudden very high leakage magnetic fields will pass through to the magnetic field sensor 21. One example of the shielding means 30 could be to use a resin material 29 for attachment of the permanent magnets 27 or permanent magnet rings 28. This resin 29 may be chosen to have a very high magnetic resistivity, thus ensuring that no leakage of magnetic field on the drive shaft 5 or hub 7 through to the magnetic field sensor 21 could occur.

It is also possible to simply provide a normal fixation resin 29 for fixing the permanent magnets 27 or permanent magnet rings 28 to the drive shaft 5 or hub 7. In this case the operation of the system is still improved, as the resin 29 will make a break between the permanent magnets 27 or permanent magnet rings 28 and the magnetic leakage flux through the drive shaft 5, thus reducing its influence on the measurements. Further, the resin provides mechanical improvements, as this will help to absorb vibration of the permanent magnets 27 or permanent magnet rings 28 with respect to the drive shaft 5, and thus improve the wear of the permanent magnets 27 or permanent magnet rings 28.

A further advantage of using one or more permanent magnets 27 or permanent magnet rings 28, is that the hub 7 may be made from a non-magnetic material. Again, this non-magnetic material could comprise a ceramic, one of the non-magnetic metals or even a plastic. By using such a non-magnetic material for the hub 7, there is no possibility of a magnetic leakage path being set up between the electromagnet 6, the armature plate 8 and the drive shaft 5. This non-magnetic hub 7 will ensure that this magnetic leakage path is broken, or at least cannot appropriately form, further reducing the possibility of stray magnetic fields in the region of the magnetic field sensor 21.

Another possibility is to ensure that the hub 7 is structured such that it does not extend along the drive shaft 5 as far as the magnetic field sensor 21. As will be clear from Figure 1, if the magnetic field sensor 21 is located in a region axially further away from the hub 7, the distance between the magnetic field sensor 21 and the drive shaft 5 will be greatly increased. This further improves the sensitivity of the rotational sensor 20, as it ensures that the gap between the drive shaft 5 and the rotational sensor 20 is rather large, and thus there is no chance of a stray magnetic field through the drive shaft 5 triggering the magnetic field sensor 21. In this way, false readings of rotation of the drive shaft 5 can be obviated. In this embodiment it may be advantageous to position the permanent magnets 27 or permanent magnet rings 28 at the end of the hub 27 in the axial direction of the drive shaft 5. This means that the permanent magnets 27 or magnet rings 28 will be the only aspects generating the magnetic field near the magnetic field sensor 21.

The magnetic field sensor 21 may be provided by a Hall Sensor 23. A Hall Sensor is well known for providing an accurate measurement of the magnetic field in the region of the sensor 23. Preferably, the Hall Sensor 23 may be provided by a Hall Sensor switch 24. A Hall Sensor switch 24 is a combined Hall Sensor 23 with a logic component attached thereto. When the Hall Sensor switch 24 detects a magnetic field is measured which is greater than a preset value, the Hall Sensor 24 produces a logic 1. When the measured magnetic field drops below this switching value, the Hall Sensor switch 24 produces a logic 0. In this way, the signals coming from the magnetic field sensor 21 are logic signals, and can thus be immediately monitored and a direct value for the rotational velocity of the drive shaft 5 determined.

As can be seen from the above, the present disclosure also relates to a method for choosing the location of the rotational sensor 20 within a compressor 1. By structuring the compressor 1 in a normal manner, the user of the compressor 1 can measure the magnetic field strengths at a variety of locations near the drive shaft 5 and hub 7. By finding a region within the compressor 1 with a very low stray magnetic field value, a magnetic field sensor 21 can be placed at this point and very accurate rotational measurements of the drive shaft 5 can be obtained. In particular, a region in the compressor 1 can be located in which the maximum leakage magnetic field is below the switching sensitivity of the chosen Hall Sensor 23 or Hall Sensor switch 24. In such a manner, a more sensitive magnetic field sensor 21 may be chosen and thus the sensitivity and accuracy of the rotational sensor 20 can be obtained.

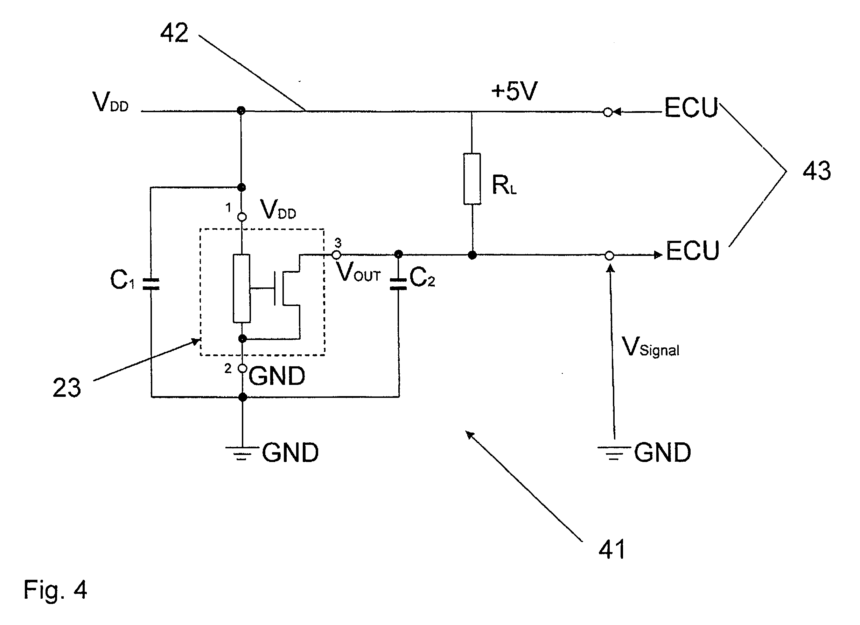

As can be seen in Figure 4, a possible electrical circuit 41 for providing the rotational sensor 20 with power, as well as for monitoring the output thereof, is provided. This circuitry shows the embodiment in which a hall sensor 23 is provided for monitoring the changing magnetic field as a result of the rotating hub 7. In the circuitry shown in Figure 4, the hall sensor 23 is provided with power from power supply line 42. A control unit 43 is provided which generates and provides the power on power supply line 42, as well as monitoring the voltage which is present at the output of the hall sensor 23. As can be seen from Figure 4, the electronic circuit 41 can be provided with a resistor R_{L} which extends from the power supply line 42 to the output of the rotational sensor 20. As will be understood from the circuitry in Figure 4, a changing magnetic field sensed by the hall sensor 23, will lead to the switch element shown within the dotted box opening and closing, Clearly, when the switch is closed, current can flow from the power supply line 42 through resistor R_{L} and down to the ground through the switch. This current flowing will lead to a voltage drop across the resistance R_{L} and will lead to the voltage at position Vₒᵤₜ being 0V. Conversely, when the hall sensor 23 does not close the switch, the circuit line between the power supply line 42 and ground is open, and thus no current flows. With no current flowing through this arm of the circuit, the 5V potential is seen at the position Vₒᵤₜ, which is monitored by the control unit 43.

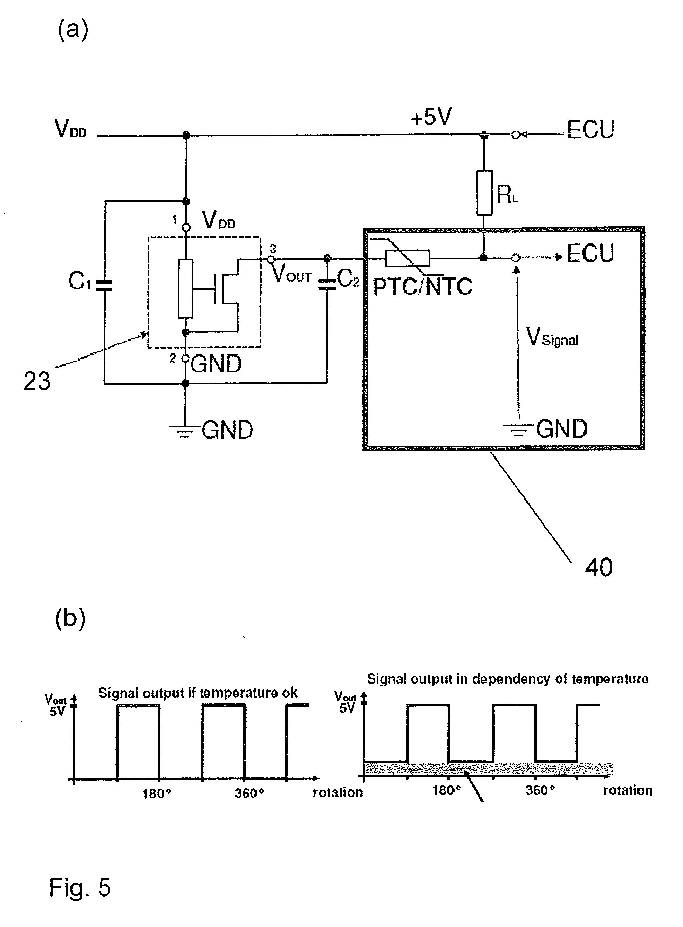

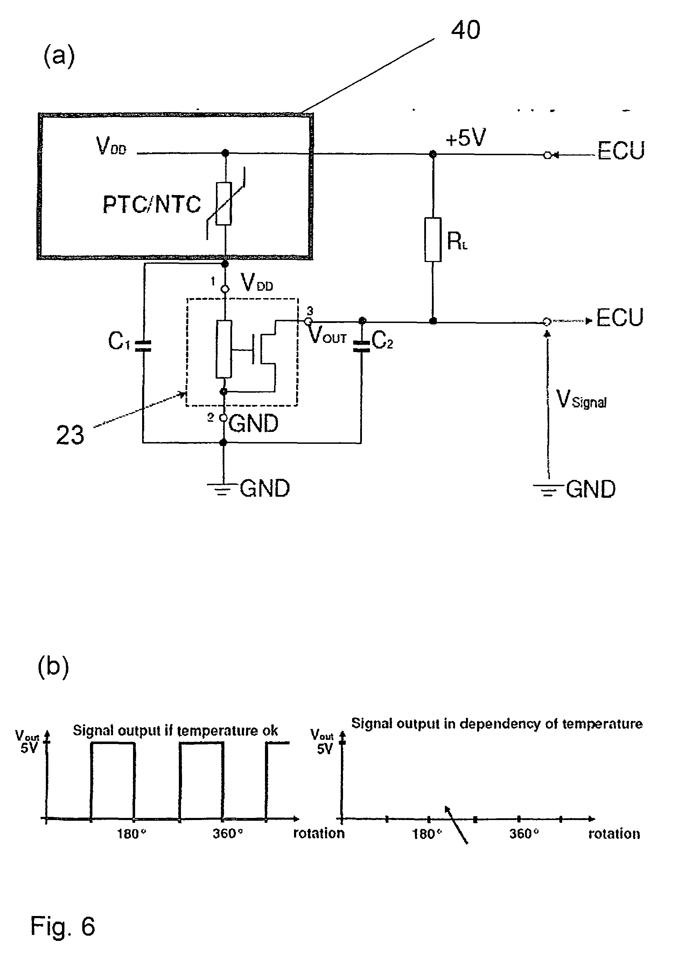

As will be appreciated from the above, the system or circuitry 41 shown in Figure 4 will lead to a generally logic type output which can be monitored by the control unit 43. When the switch embodied within the hall sensor 23 shown as the elements within the dotted box of Figure 4 is closed, the voltage drop across the resistor R_{L} is monitored as a 0V at Vₒᵤₜ by the control unit 43. Conversely, when no current is flowing through this arm of the circuitry, because the hall sensor 23 has not closed the switch shown in Figure 4, the full supply voltage is seen at the Vₒᵤₜ and is also monitored by the control unit 43. A schematic view of the voltage measured by the control unit 43 can be seen in Figures 5b and 6b, which are related to a further aspect of the present disclosure and show the potential for utilising a temperature sensor. The graphs shown in each of Figures 5b and 6b at the left hand side show the operation of the circuitry of Figure 4, as described above.

If the circuitry shown in Figure 4 is embodied within the compressor 1, it is also possible, and in some cases desirable, to incorporate some form of temperature measurement. What is particularly advantageous about the use of the system described above, especially that shown in Figure 4, is that a simple addition to this existing electrical circuitry 41 allows for a temperature measurement to be made. This temperature measurement of the compressor 1 and/or its peripheral components can be made without having to provide additional circuitry into the compressor 1, which both increases the functionality of the compressor 1 without suffering from additional pieces or aspects incorporated therein.

The use of a temperature sensor 40 is beneficial as a secondary monitoring means, to ensure that damage to the compressor 1 is avoided. Whilst the compressor 1 may be operating appropriately, without any slippage in the drive system 3 leading through the hub 7 to the driveshaft 5, there is still no direct measurement of other potential faults within the compressor 1 and/or its peripheral components, in particular clutch assembly 4. For example, if the bearings 9 were to be running with a reduced level of lubricant, it is to be expected that the bearings 9 would become rather hot. Indeed, it is not impossible for the bearings 9 to run at such a high temperature that damage to the bearings 9 is incurred which could also lead to further damage to the shell nose 10, or at least the raceways holding the bearings 9. Such damage can either significantly shorten the lifetime of the compressor 1 in general, or could in fact lead to complete failure of the compressor 1. A simple method and system for avoiding such detrimental effects within the compressor 1, can be implemented by monitoring the temperature within the compressor 1 and/or its peripheral components. Advantageously, the temperature is monitored in the region of the bearings 9 and shell nose 10.

If we start from the circuitry in Figure 4 for operation of the rotational sensor 20, and in particular using the electronic circuitry 41, a number of simple possibilities exist for monitoring the temperature of the compressor 1. If a temperature sensor 40 is incorporated into the circuitry shown in Figure 4 between the output of the hall sensor 23 and the input of the control unit 43, that is at a region lying between the resistor R_{L} and the output of the hall sensor 23, the voltage which is sensed by the control unit 43 can be appropriately adjusted.

The examples shown in the circuitry of both Figures 5 and 6 are the use of a device which exhibits either a positive or negative temperature coefficient effect. These devices are well known in the art, and are substantially devices whose resistivity or conductivity changes as a result of the temperature. In particular, negative temperature coefficient device shows an increased thermal conductivity as the temperature of the device increases; whereas a positive temperature coefficient device exhibits an increase in its resistance as the temperature increases, As shown in Figure 5, the input to the control unit 43 is monitoring the voltage seen at the mid point of the potential divider formed by the resistor R_{L} and the temperature coefficient device, embodied as the temperature sensor 40. As the resistance of the temperature sensor 40 changes, it is clear that the voltage will also change, and that the control unit 43 will monitor this voltage change and can equate this to an increasing temperature within the compressor 1.

The example shown in Figure 5 is of a positive temperature coefficient device. As can be understood from the circuitry shown in Figures 5a, as the temperature of the compressor 1 increases, the resistance of the temperature sensor 40 will also increase. With an increasing resistance of the temperature sensor 40, the low level signal monitored by the control unit 43 will begin to rise. That is, when the hall sensor 43 closes the switch and a current flows through the resister R_{L} and the temperature sensor 40, as the resistance of the temperature sensor 40 increases, in the example being described with increasing temperature of the compressor 1, the voltage drop across the temperature sensor 40 will also change. Clearly, if the resistance increases such that the resistance of the temperature sensor 40 is not negligible with regard to the resistor R_{L}, it can be understood that the voltage measured by the control unit 43 when the switch is closed will not be 0V, as in the case when the resistance of the temperature sensor 40 is negligible with regard to the resistance of the resistor R_{L}, as a voltage drop will be measured across the temperature sensor 40. Looking at the graph in Figure 5b, to the right of the Figure in particular, the effect of an increasing temperature of the compressor 1 on the output signal monitored by the control unit 43 is seen. When the temperature within the compressor 1 as measured by the temperature sensor 40 increases, the voltage at the low signal point is shifted upwards, as a result of the potential divider formed in the circuitry.

Obviously, the control unit 43 can monitor the shift in the low voltage signal, and can equate this to the temperature of the compressor 1, as measured by the temperature sensor 40. The temperature coefficient effects of the temperature sensor 40 will be known in advance, and thus the control unit 43 is programmed or operates such that when the low signal (old 0V signal) reaches a certain value, the control unit 43 judges this to be a temperature which is too high, and thus can be used to switch off the compressor 1, or drive system 3. In particular, the control unit 43 could be configured to switch off the electromagnet 6, thus leading the armature plate 8 to disengage from the drive system 3 and stop the rotation of the driveshaft 5.

Whilst the above description is given for a positive temperature coefficient device, a negative temperature coefficient device could also be used. As the control unit 43 is monitoring the voltage between the potential divider formed by the resistor R_{L} and the temperature sensor 40, with a negative temperature coefficient device, the low signal will not be at 0V, rather it will be at an intermediate voltage determined by the resistance of the temperature sensor 40. As the temperature increases, the resistance of the temperature sensor 40 decreases, which will also lead to a decrease in the low voltage signal. Once again, the control unit 43 will be adapted and programmed to monitor the low voltage signal, and can judge when the temperature of the compressor 1 is too high as a result of this shift in the low signal voltage. The remainder of the operation functions as described above with the negative temperature coefficient temperature sensor 40.

Turning to Figure 6, we see an alternative design for locating the temperature sensor 40 within the electrical circuitry 41 used for powering the rotational sensor 20. The temperature sensor 40 is at this time embodied within the line leading from the power supply 42 to the input of the rotational sensor 20, and in particular the hall sensor 23. In the same way as described above, a changing temperature will lead to a changing resistance of the temperature sensor 40, which will lead to a change in the voltage drop across the temperature sensor 40, and a change to the voltage seen at the input of the hall sensor 23. If the resistance of the temperature sensor 40 increases to a too high a level, it is clear that the voltage drop across the resistor will become rather high.

If the voltage drop across the temperature sensor 40 increases to such a point that the voltage seen across the hall sensor 23 is not significant enough to actually power the hall sensor 23, the hall sensor 23 will switch off and will lead to a constantly closed switch within the rotational sensor 20 shown in the dotted box of Figure 6a. When the switch element is constantly closed, the entire 5V from the power supply line 42 is dropped across the resistor R_{L} and the control unit 43 registers a constant 0V. Assuming the control unit 43 is also monitoring the fact that the drive system 3 is functioning, and that the magnetic clutch assembly 4 is also on, the control unit 43 can determine that a failure has occurred in the system. The failure is either that of a seized driveshaft 5 stopping the hub 7 from rotating, and thus stopping the hall sensor 23 from monitoring a change in magnetic field, or that the temperature monitored by the temperature sensor 40 has increased such that potential damage to the compressor 1 is occurring. In either case, the control unit 43 can respond by switching off the drive system 3, or disengaging the magnetic clutch assembly 4 to ensure that the compressor 1 stops functioning, and either the stuck driveshaft 5 or overheating compressor 1 can be investigated and fixed.

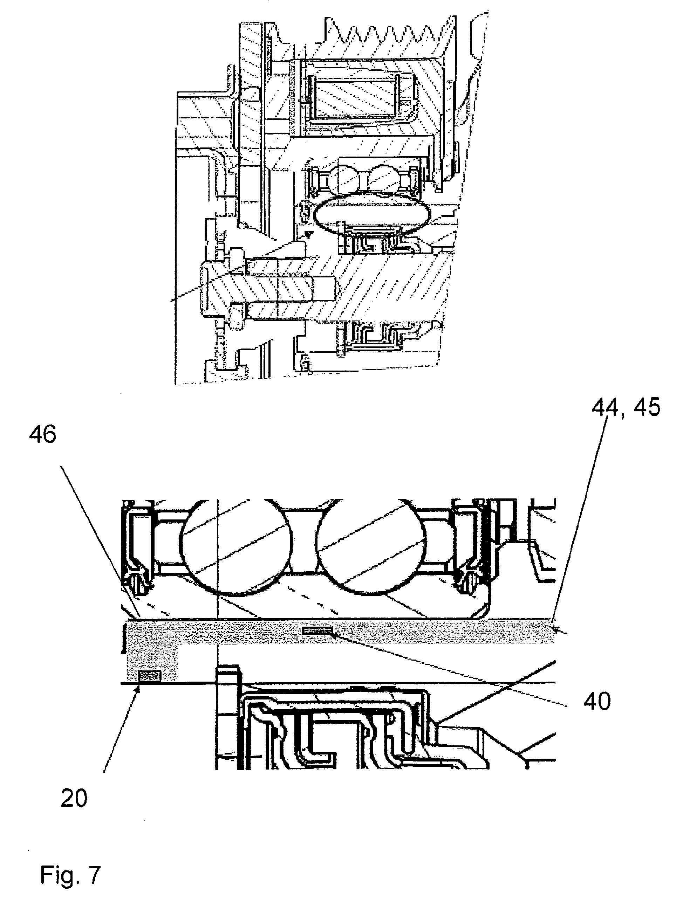

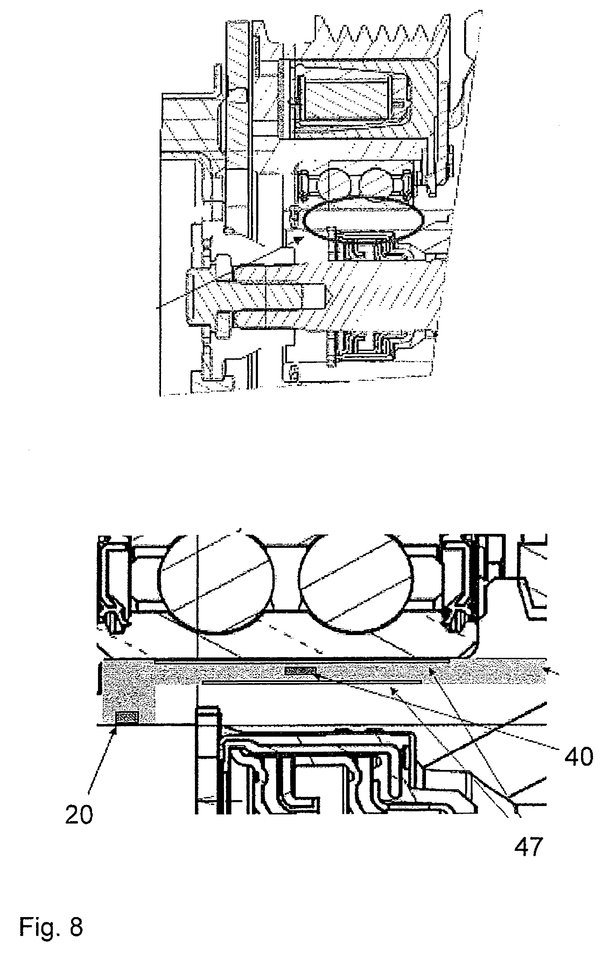

As is clear from the above, by incorporating a simple temperature sensor 40 within the electrical circuitry 41 of the rotational sensor 20, a further level of safety can be included by monitoring the operation of the compressor 1, and in particular the temperature thereof. As is to be understood from the above, the most common place for overheating of the compressor 1 is in the region of the bearings 9 and the shell nose 10. Conveniently, it is also advantageous to position the wiring 31 leading to the rotational sensor 20 through sections of the compressor 1 and in particular in a region of the shell nose 10 between the bearings 9 and the shell nose 10. One possible solution for providing the wiring 31 through to the rotational sensor 20, is to provide a channel 44 within the outer surface of the shell nose 10. This channel 44 can be seen in both Figures 7 and 8, which show the region between the shell nose 10 and the bearings 9.

As the channel 44 has already been provided to allow the wiring 31 to the rotational sensor 20, it is a straightforward matter to also incorporate the temperature sensor 40 within the channel 44. If the temperature sensor 40 is included in the electrical circuitry 41 as shown in Figures 5 and 6, it is a relatively straightforward matter to ensure that the temperature sensor 40 is physical placed in the channel 44 in the region next to the bearings 9. As has been discussed above, the most likely place for overheating of the compressor 1 is in the region by the bearings 9 and shell nose 10, and thus with the channel 44 already in place, positioning of the temperature sensor 40 in this desired region is relatively straightforward.

Clearly, the channel 44 is provided in the outer surface of the shell nose 10, if present. In order to protect the wiring 31 and temperature sensor 40, either an insert 45 made up of a cable trunking, or the like, or a cover 46 which will cover the wiring 31 and temperature sensor 40 within the channel 44 can also be provided. The insert 45 could be simply a plastic or ceramic type insert which will appropriately protect the wiring 31 and temperature sensor 40 from the physical hardships in the region between the shell nose 10 and bearings 9, or a solid cover 46 which provides the same advantage. Obviously, if a temperature sensor 40 is to be incorporated within the insert 45 or cover 46, these materials are preferably not made from poor thermal conductors.

One final possibility to increase the temperature measuring efficiency of the temperature sensor 40, is to provide a series of heat plates 47 in the region of the channel 44. The heat plates 47 are preferably made from a good thermal conducting material, potentially a metal, for example copper, which will not only protect the wiring 31 and temperature sensor 40, but will also ensure that the temperature in this region of the compressor 1 is transferred with high efficiency to the temperature sensor 40. Further advantages of the heat plates 47 are that these can be provided along the outer and inner surfaces of the channel 44 of the shell nose 10. The heat plates 47 will lead to the same temperature being present very quickly along the whole length of the heat plate 47, as a result of the good thermal conductivity of the material chosen. This transferral of heat along the heat plates 47 means that the temperature sensor 40 can be provided in any section of the channel 44, and that this will then definitely receive an accurate indication of the temperature of the compressor 1 in the region near the bearings 9 and shell nose 10.

In this way, the compressor 1 can incorporate both a speed or rotational sensor 20 and a temperature sensor 40, such that seizing of the compressor 1 can readily be monitored by the rotational sensor 20, and overheating of the compressor 1 can be measured by means of the same electrical circuitry 41 by an included temperature sensor 40.

Whilst features of the above disclosure may have been described in combination with other features, this is purely by way of example, The above disclosure should be considered as a variety of aspects of the compressor 1 and rotational sensor 20, which can be interchanged and reconfigured as desired. The general concept underlying the present disclosure is that the location of a rotational sensor 20 can be optimised such that a very sensitive magnetic field sensor 21 can be employed in a region where magnetic fields are reduced or indeed not present, such that the magnetic field sensor 21 can accurately detect the passing of a magnetic portion 22 on either the hub 7 or drive shaft 5.

### REFERENCE NUMERAL LIST

- 1: Compressor
- 2: Pulley
- 3: Drive System
- 4: Magnetic Clutch Assembly
- 5: Drive Shaft
- 6: Electromagnet
- 7: Hub
- 8: Armature Plate
- 9: Bearings
- 10: Shell Nose
- 20: Rotational Sensor
- 21: Magnetic Field Sensor
- 22: Magnetic Portion
- 23: Hall Sensor
- 24: Hall Sensor switch
- 25: Extensions
- 26: Air Gap
- 27: Permanent Magnets
- 28: Permanent Magnet Rings
- 29: Resin
- 30: Shielding Means
- 31: Wiring
- 40: Temperature Sensor
- 41: Electronic Circuitry
- 42: Power Supply Line
- 43: Control Unit
- 44: Channel
- 45: Insert
- 46: Cover
- 47: Heat Plates

## Claims

1. A compressor (1), comprising a pulley (2) for connection to a drive system (3) and a magnetic clutch assembly (4) for connecting a drive shaft (5) to the pulley (2) such that the rotation of the pulley (2) is transferred to the drive shaft (5), wherein
the clutch arrangement (4) comprises an electromagnet (6), a hub (7) attached to the drive shaft (5) and an armature plate (8); and wherein
the compressor (1) further comprises an electronic rotation sensor (20) which provides an electrical output indicative of the rotation speed of the hub (7) and the compressor being **characterized in that** it further comprises a temperature sensor (40), which is provided within the same electronic circuit (41) as the rotation sensor (20), and which is associated with the compressor's ball bearings (9) to monitor the temperature thereof.

2. The compressor (1) according to claim 1, wherein the rotation sensor (20) comprises a magnetic field sensor (21) for monitoring a changing magnetic field generated with rotation of the hub (7), wherein preferably the magnetic field sensor (21) comprises one or more magnetic portions (22) attached to, or forming part of, the drive shaft (5) or hub (7), which generate the magnetic field.

3. The compressor (1) according to either of claims 1 or 2, wherein the rotation sensor (20) is a magnetic field sensor (21) which is further a Hall Sensor (23), more preferably the magnetic field sensor (21) is a Hall Sensor switch (24) giving a TTL output, wherein when the Hall Sensor switch (24) detects a magnetic field above a switching value, the output from the Hall Sensor switch (24) is a logic 1, and when the Hall Sensor switch (24) detects a magnetic field below a switching value, or does not detect a magnetic field, the output from the Hall Sensor switch (24) is a logic 0.

4. The compressor (1) according to any one of the previous claims, wherein the temperature sensor (40) is provided by an electronic device which exhibits either positive or negative temperature coefficient behaviour, and so adjusts the electrical characteristics of the electronic circuit (41) in a known manner with varying temperature.

5. The compressor (1) according to any one of the previous claims, in particular claim 4, wherein the temperature sensor (40) is located within the electronic circuit (41) between the power supply line (42) and the rotational sensor (20), such that when the temperature increases, the resistance of the temperature sensor also increases, until the voltage applied to the rotational sensor (20) is too low to power the rotational sensor (20) and this switches off.

6. The compressor (1) according to any one of the previous claims, in particular claim 5, wherein a control unit (43) is provided which monitors the output from the rotational sensor (20) and is adapted to register an overheat failure when the output of the rotational sensor (20) is suddenly lost, in particular as a result of the temperature sensor (40) reducing the voltage to the rotational sensor (20) and leading to the rotational sensor (20) switching off.

7. The compressor (1) according to any one of the previous claims, in particular claim 4, wherein the temperature sensor (40) is located within the electronic circuit (41) between the output of the rotational sensor (20) and the input of a control unit (43), wherein the control unit (43) monitors the output of the rotational sensor (20) and is adapted to derive there-from a rotational speed of the hub (7).

8. The compressor (1) according to any one of the previous claims, in particular claim 7, wherein the control unit (43) is further adapted to register a change in the output signal from the rotational sensor (20) as a result of the changing characteristics of the temperature sensor (40) and to derive the temperature of the compressor (1) from this.

9. The compressor (1) according to any one of the previous claims, in particular claim 8 when dependent upon claims 3, 4 and 7, wherein the changing temperature at the temperature sensor (40) leads to a shifting of the actual voltage of the logic 0 which is output from the Hall sensor switch (24), wherein the control unit (43) is adapted to monitor this change and derive the temperature within the compressor (1) from this shift.

10. The compressor (1) according to any one of the previous claims, in particular claims 6 to 9, wherein the control unit (43) is further adapted to disengage the magnetic clutch assembly (4) when it determines that a temperature above a preset value exists within the compressor (1).

11. The compressor (1) according to any one of the previous claims, wherein the temperature sensor is located between the shell nose (10) of the compressor (1) and ball bearings (9) which are provided between the shell nose (10) and the pulley (2).

12. The compressor (1) according to any one of the previous claims, wherein the temperature sensor (40) is provided within a channel (44) formed in the outer surface of the shell nose (10), wherein the channel (44) is provided extending along at least a part of the length of the shell nose (10) to the region of the hub (7) and is used to house the wiring (31) leading to the rotation sensor (20).

13. The compressor (1) according to claim 12, wherein the channel (44) is provided with either an insert (45) for housing the wiring (31) to the rotation (20) and temperature (40) sensors, or with a cover (46) for covering the wiring (31) which is within the channel (44).

14. The compressor (1) according to any one of the previous claims, in particular to either of claims 12 or 13, wherein heat plates (47) made from a material with a high thermal conductivity, preferably a metal, are provided in the region where the temperature sensor (40) will be positioned, and are aligned with the ball bearings (9) and extending away therefrom, to ensure that the heat of the compressor (1), in particular the ball bearings (9), is appropriately passed to the temperature sensor (40) irrespective of whether the temperature sensor (40) is directly in the middle of the ball bearings (9).

## Patentansprüche

1. Kompressor (1), eine Riemenscheibe (2) zum Anschluss an ein Antriebssystem (3) und eine Magnetkupplungsanordnung (4) umfassend, um eine Antriebswelle (5) so an die Riemenscheibe (2) anzuschließen, dass die Drehung der Riemenscheibe (2) auf die Antriebswelle (5) übertragen wird, wobei
die Kupplungsanordnung (4) einen Elektromagneten (6), eine Nabe (7), die an der Antriebswelle (5) angebracht ist, und eine Ankerscheibe (8) umfasst; und wobei
der Kompressor (1) darüber hinaus einen elektronischen Rotationssensor (20) umfasst, der einen elektrischen Ausgang bereitstellt, der die Drehzahl der Nabe (7) angibt, und wobei der Kompressor **dadurch gekennzeichnet ist, dass** er darüber hinaus einen Temperatursensor (40) umfasst, der im selben elektronischen Schaltkreis (41) vorgesehen ist wie der Rotationssensor (20), und der mit Kugellagern (9) des Kompressors verbunden ist, um deren Temperatur zu überwachen.

2. Kompressor (1) nach Anspruch 1, wobei der Rotationssensor (20) einen Magnetfeldsensor (21) umfasst, um ein sich veränderndes Magnetfeld zu überwachen, das bei der Drehung der Nabe (7) entsteht, wobei der Magnetfeldsensor (21) vorzugsweise einen oder mehrere Magnetfeldabschnitt/e (22), der/die an der Antriebswelle (5) oder der Nabe (7) angebracht ist/sind oder einen Teil von diesen bildet/bilden, die das Magnetfeld erzeugen.

3. Kompressor (1) nach einem der Ansprüche 1 oder 2, wobei der Rotationssensor (20) ein Magnetfeldsensor (21) ist, der darüber hinaus ein Hall-Sensor (23) ist, der Magnetfeldsensor (21) bevorzugter Weise ein Hall-Sensorschalter (24) ist, der einen TTL-Ausgang liefert, wobei der Hall-Sensorschalter (24) ein Magnetfeld über einem Schaltwert erfasst, der Ausgang aus dem Hall-Sensorschalter (24) eine logische 1 ist, und wenn der Hall-Sensorschalter (24) ein Magnetfeld unter einem Schaltwert erfasst, oder kein Magnetfeld erfasst, der Ausgang aus dem Hall-Sensorschalter (24) eine logische 0 ist.

4. Kompressor (1) nach einem der vorhergehenden Ansprüche, wobei der Temperatursensor (40) durch eine elektronische Vorrichtung bereitgestellt ist, die entweder ein positives oder negatives Temperaturkoeffizientenverhalten aufweist und so die elektrischen Eigenschaften des elektronischen Schaltkreises (41) auf eine bekannte Weise bei einer sich verändernden Temperatur einstellt.

5. Kompressor (1) nach einem der vorhergehenden Ansprüche, insbesondere Anspruch 4, wobei der Temperatursensor (40) im elektronischen Schaltkreis (41) zwischen der Energieversorgungsleitung (42) und dem Rotationssensor (20) so angeordnet ist, dass, wenn die Temperatur ansteigt, auch der Widerstand des Temperatursensors ansteigt, bis die an den Rotationssensor (20) angelegte Spannung zu niedrig ist, um den Rotationssensor (20) mit Energie zu versorgen, und dieser abschaltet.

6. Kompressor (1) nach einem der vorhergehenden Ansprüche, insbesondere Anspruch 5, wobei eine Steuereinheit (43) vorgesehen ist, die den Ausgang aus dem Rotationssensor (20) überwacht und dazu angepasst ist, einen Überhitzungsfehler zu registrieren, wenn der Ausgang des Rotationssensors (20) insbesondere als Ergebnis dessen plötzlich verloren geht, dass der Temperatursensor (40) die Spannung für den Rotationssensor (20) senkt und dadurch bewirkt, dass der Rotationssensor (20) abschaltet.

7. Kompressor (1) nach einem der vorhergehenden Ansprüche, insbesondere Anspruch 4, wobei der Temperatursensor (40) im elektronischen Schaltkreis (41) zwischen dem Ausgang des Rotationssensors (20) und dem Eingang der Steuereinheit (43) angeordnet ist, wobei die Steuereinheit (43) den Ausgang des Rotationssensors (20) überwacht und dazu angepasst ist, daraus eine Drehzahl der Nabe (7) abzuleiten.

8. Kompressor (1) nach einem der vorhergehenden Ansprüche, insbesondere Anspruch 7, wobei die Steuereinheit (43) darüber hinaus dazu angepasst ist, eine Veränderung beim Ausgangssignal aus dem Rotationssensor (20) als Ergebnis der sich verändernden Eigenschaften des Temperatursensors (40) zu registrieren und daraus die Temperatur des Kompressors (1) abzuleiten.

9. Kompressor (1) nach einem der vorhergehenden Ansprüche, insbesondere Anspruch 8 bei Abhängigkeit von den Ansprüchen 3, 4 und 7, wobei die sich verändernde Temperatur am Temperatursensor (40) zu einer Verschiebung der aktuellen Spannung der logischen 0 führt, die aus dem Hall-Sensorschalter (24) ausgegeben wird, wobei die Steuereinheit (43) dazu angepasst ist, diese Veränderung zu überwachen und die Temperatur im Kompressor (1) ausgehend von dieser Verschiebung abzuleiten.

10. Kompressor (1) nach einem der vorhergehenden Ansprüche, insbesondere den Ansprüchen 6 bis 9, wobei die Steuereinheit (43) darüber hinaus dazu angepasst ist, die Magnetkupplungsanordnung (4) auszukuppeln, wenn sie bestimmt, dass im Kompressor (1) eine Temperatur über einem voreingestellten Wert besteht.

11. Kompressor (1) nach einem der vorhergehenden Ansprüche, wobei der Temperatursensor zwischen der Gehäusenase (10) des Kompressors (1) und den Kugellagern (9) angeordnet ist, die zwischen der Gehäusenase (10) und der Riemenscheibe (2) vorgesehen sind.

12. Kompressor (1) nach einem der vorhergehenden Ansprüche, wobei der Temperatursensor (40) mit einem Kanal (44) versehen ist, der in der Außenfläche der Gehäusenase (10) ausgebildet ist, wobei der Kanal (44) sich entlang zumindest eines Teils der Länge der Gehäusenase (10) zum Bereich der Nabe (7) erstreckend vorgesehen ist und dazu verwendet wird, die zum Rotationssensor (20) führende Verkabelung (31) unterzubringen.

13. Kompressor (1) nach Anspruch 12, wobei der Kanal (44) entweder mit einem Einsatz (45) zum Unterbringen der Verkabelung (31) zum Rotationssensor (20) und Temperatursensor (40) oder einer Abdeckung (46) zum Abdecken der im Kanal (44) befindlichen Verkabelung (31) versehen ist.

14. Kompressor (1) nach einem der vorhergehenden Ansprüche, insbesondere den Ansprüchen 12 oder 13, wobei Wärmeschutzbleche (47), die aus einem Material mit hoher Wärmeleitfähigkeit, vorzugsweise einem Metall hergestellt sind, in dem Bereich vorgesehen sind, in dem der Temperatursensor (40) angeordnet wird, und mit den Kugellagern (9) ausgerichtet sind und sich von diesen weg erstrecken, um sicherzustellen, dass die Wärme des Kompressors (1), insbesondere der Kugellager (9) angemessen zum Temperatursensor (40) geleitet wird, ungeachtet dessen, ob sich der Temperatursensor (40) direkt in der Mitte der Kugellager (9) befindet.

## Revendications

1. Compresseur (1), comprenant une poulie (2) destinée à une mise en relation avec un système d'entraînement (3) et ensemble d'embrayage magnétique (4) destiné à mettre en relation un arbre d'entraînement (5) avec la poulie (2) de telle sorte que la rotation de la poulie (2) soit transférée à l'arbre d'entraînement (5), dans lequel :
l'agencement d'embrayage (4) comprend un électro-aimant (6), un moyeu (7) fixé à l'arbre d'entraînement (5) et un plateau d'armature (8) ; et dans lequel :
le compresseur (1) comprend en outre un capteur de rotation électronique (20) qui fournit une sortie électrique indicative de la vitesse de rotation du moyeu (7), le compresseur étant **caractérisé en ce qu'**il comprend en outre un capteur de température (40), qui est disposé à l'intérieur du même circuit électronique (41) que le capteur de rotation (20), et qui est associé aux roulements à billes du compresseur (9) pour surveiller la température de celui-ci.

2. Compresseur (1) selon la revendication 1, dans lequel le capteur de rotation (20) comprend un capteur de champ magnétique (21) destiné à surveiller un champ magnétique variable généré avec la rotation du moyeu (7), dans lequel le capteur de champ magnétique (21) comprend de préférence une ou plusieurs parties magnétiques (22) fixées sur, ou faisant partie de, l'arbre d'entraînement (5) ou le moyeu (7), qui génèrent le champ magnétique.

3. Compresseur (1) selon l'une ou l'autre des revendications 1 ou 2, dans lequel le capteur de rotation (20) est un capteur de champ magnétique (21) qui est en outre un capteur à effet Hall (23), de manière plus préférée le capteur de champ magnétique (21) est un commutateur à capteur à effet Hall (24) fournissant une sortie TTL, dans lequel lorsque le commutateur à capteur à effet Hall (24) détecte un champ magnétique se situant au-dessus d'une valeur de commutation, la sortie en provenance du commutateur à capteur à effet Hall (24) est un niveau logique 1, et lorsque le commutateur à capteur à effet Hall (24) détecte un champ magnétique se situant en dessous d'une valeur de commutation, ou ne détecte aucun champ magnétique, la sortie en provenance du commutateur à capteur à effet Hall (24) est un niveau logique 0.

4. Compresseur (1) selon l'une quelconque des revendications précédentes, dans lequel le capteur de température (40) est fourni par un dispositif électronique qui présente un comportement de coefficient de température soit positif soit négatif, et ainsi règle les caractéristiques électriques du circuit électronique (41) d'une façon connue avec une température qui varie.

5. Compresseur (1) selon l'une quelconque des revendications précédentes, en particulier selon la revendication 4, dans lequel le capteur de température (40) se situe à l'intérieur du circuit électronique (41) entre la ligne d'alimentation (42) et le capteur de rotation (20), de telle sorte que lorsque la température augmente, la résistance du capteur de température augmente également, jusqu'à ce que la tension appliquée au capteur de rotation (20) soit trop basse pour alimenter le capteur de rotation (20) et que celui-ci se mette hors service.

6. Compresseur (1) selon l'une quelconque des revendications précédentes, en particulier selon la revendication 5, dans lequel est fournie une unité de commande (43) qui surveille la sortie en provenance du capteur de rotation (20) et qui est adaptée pour enregistrer une défaillance de surchauffe lorsque la sortie du capteur de rotation (20) est soudainement perdue, en particulier suite à une réduction par le capteur de température (40) de la tension appliquée au capteur de rotation (20), ce qui conduit le capteur de rotation (20) à se mettre hors service.

7. Compresseur (1) selon l'une quelconque des revendications précédentes, en particulier selon la revendication 4, dans lequel le capteur de température (40) se situe à l'intérieur du circuit électronique (41) entre la sortie du capteur de rotation (20) et l'entrée d'une unité de commande (43), dans lequel l'unité de commande (43) surveille la sortie du capteur de rotation (20) et est adaptée pour en déduire une vitesse de rotation du moyeu (7).

8. Compresseur (1) selon l'une quelconque des revendications précédentes, en particulier selon la revendication 7, dans lequel l'unité de commande (43) est en outre adaptée pour enregistrer une modification dans le signal de sortie en provenance du capteur de rotation (20) en raison d'une modification des caractéristiques du capteur de température (40) et en déduire la température du compresseur (1).

9. Compresseur (1) selon l'une quelconque des revendications précédentes, en particulier selon la revendication 8 quand elle dépend des revendications 3, 4 et 7, dans lequel la modification de la température au niveau du capteur de température (40) conduit à un décalage de la tension réelle du niveau logique 0 qui est délivrée en sortie par le commutateur à capteur à effet Hall (24), dans lequel l'unité de commande (43) est adaptée pour surveiller cette modification et déduire la température à l'intérieur du compresseur (1) à partir de ce décalage.

10. Compresseur (1) selon l'une quelconque des revendications précédentes, en particulier selon les revendications 6 à 9, dans lequel l'unité de commande (43) est en outre adaptée pour désengager l'ensemble d'embrayage magnétique (4) lorsqu'elle détermine que la température à l'intérieur du compresseur (1) se situe au-dessus d'une valeur préréglée.

11. Compresseur (1) selon l'une quelconque des revendications précédentes, dans lequel le capteur de température se situe entre le nez de l'enveloppe (10) du compresseur (1) et des roulements à billes (9) qui sont disposés entre le nez de l'enveloppe (10) et la poulie (2).

12. Compresseur (1) selon l'une quelconque des revendications précédentes, dans lequel le capteur de température (40) est disposé à l'intérieur d'un canal (44) formé dans la surface extérieure du nez de l'enveloppe (10), dans lequel le canal (44) est prévu pour à s'étendre le long d'au moins une partie de la longueur du nez de l'enveloppe (10) vers la région du moyeu (7) et est utilisé pour loger le câblage (31) conduisant au capteur de rotation (20).

13. Compresseur (1) selon la revendication 12, dans lequel le canal (44) est doté soit d'un insert (45) pour loger le câblage (31) vers les capteurs de rotation (20) et de température (40), soit d'un capot (46) pour couvrir le câblage (31) qui se situe à l'intérieur du canal (44).

14. Compresseur (1) selon l'une quelconque des revendications précédentes, en particulier selon l'une ou l'autre des revendications 12 ou 13, dans lequel des plaques thermiques (47) réalisées dans un matériau à conductivité thermique élevée, de préférence un métal, sont disposées dans la région où sera positionné le capteur de température (40), et sont alignées avec les roulements à billes (9) en s'étendant en s'en éloignant, afin de garantir que la chaleur du compresseur (1), en particulier des roulements à billes (9), est transmise de manière appropriée au capteur de température (40) indépendamment du fait que le capteur de température (40) se situe ou pas directement au milieu des roulements à billes (9).
